# EUROPEAN PATENT APPLICATION

(11) **EP 2 184 154 A1**
(43) Date of publication of application: **12.05.2010**
(21) Application number: 08168626.3
(22) Date of filing: 07.11.2008
(51) Int. Cl.: B29C 45/14

(54) **Method for manufacturing a solid synthetic product comprising solid identification members**

(71) Applicant: Nederlandse Organisatie voor toegepast-natuurwetenschappelijk onderzoek TNO, 2628 VK Delft (NL)
(72) Inventor: Vermeulen, Barend Cornelis Wilhelmus, 5673 LG Nuenen (NL)
(74) Representative: Hatzmann, Martin

(57) **Abstract**

Method for manufacturing a solid synthetic product (1) comprising one or more solid identification members (2). A liquid synthetic mass (3) is fed into a mold (5) via a mold entry (6), during which the identification members are supplied to the liquid mass and fed into the mold via the mold entry, together with the liquid mass. Several of the identification members may be fed into the mold at different mutual intervals, e.g. at randomly chosen intervals. The identification members may comprise metal, magnetic or radiation reflective or absorbent bodies. Alternatively an identification member may comprise an RFID tag.

## Description

The present invention refers to a method for manufacturing a solid synthetic product comprising one or more solid identification members.

From the prior art it is known to manufacture such a product by providing the mold, in which the product is made, with means which are arranged to fix e.g. an RFID tag or any other solid identification (ID) member, to the mold cavity -e.g. to a surface of the mold cavity- before supplying a liquid synthetic mass and feeding it into the mold cavity via a mold entry, after which the liquid synthetic mass solidifies and the product can be pushed out of the mold. RFID tags or other ID members are often used to identify products in a logistical process and/or as part of a security system against misuse of theft.

A drawback of the prior art method and resulting products is that, as the location of the ID member is equal for all products made in equal molds this information can be used for fraudulent use, e.g. for theft of the relevant products.

One aim of the present invention is to provide a method and products providing improved security properties.

To that end, in a method for manufacturing a solid synthetic product comprising one or more solid identification members, comprising the supply of a liquid synthetic mass, feeding it into a mold via a mold entry, according to the invention it is preferred to supply said one or more identification members to said liquid mass and to feed it/them into the mold via said mold entry together with said liquid mass.

In this way the ID member(s) will be fed into the product, driven by/in the stream of liquid synthetic material and will "land" somewhere in the mold cavity and thus somewhere within the product. Moreover, due to the fact that the synthetic material will solidify first in the direct vicinity of the mold surface, and the ID members will be driven by the mainstream of the liquid synthetic material, which will flow at some distance of the mold surface, it may be expected that the ID members will only stop their motion at some location distant from the mold surface and thus distant from the surface of the product. Due to that the ID member(s) will be invisible for outside optical inspection. Besides that invisibility for outside optical inspection, the location of the ID members is unknown, as it is determined by the flow patterns (rheology) of the liquid synthetic material within the mold during the manufacture of the product.

To boost those effects several of said identification members may be fed into the mold at different mutual intervals, e.g. at randomly chosen intervals, resulting in several ID members which are invisibly and located at randomly and rheologically determined locations within the product.

The identification member may comprise a modern RFID tag, having very limited dimensions, e.g. of between 1 - 3 mm. It is preferred that the RFID tag is a 3D-sensitive RFID tag, e.g. formed from three 1D-sensitive RFID tags.

The identification members may comprise a metal body or a magnetic body, or may be made of a material which -contrary to its surrounding material- is reflective or absorbent for a specific wavelength area, e.g. for infrared or ultraviolet radiation. Below it will be elucidated how such ID members may be used for identification of the products.

In a method for using a product made by the method as outlined hereinbefore it is preferred to include the following steps:
- In a first stage, e.g. as a final step of the manufacture of the product, after the (solidified) product has been released from the mold, the location and/or the magnetic field strength respectively of said several identification members, residing inside the product, is determined from outside the product. Next a code is assigned to the product and/or to the location and/or the magnetic field strength respectively of the identification members, residing inside the product, which can be represented by <image parameters of the location/magnetic field of the ID member> <product code>, which link may be input into a product registration database.
- In a second stage, e.g. in any stage of the logistic process, the location and/or the magnetic field strength respectively of said several identification members residing inside the product is determined from outside the product, after which a code is assigned to the product, based on the determined location and/or the magnetic field strength respectively of the identification members residing inside the product, e.g. by retrieving in said product registration database the parameters representing the images of ID member locations and/or magnetic fields within the product and the product codes assigned to them. In this way product codes can be read from the product, viz. by means of the <image parameters> <product code> linkage in de registration database, which product codes may be used for e.g. product tracing and/or security reasons.

Hereinafter the invention will be discussed more in detail with reference to some figures.
- Figure 1: illustrates the manufacture of a product including a number of ID members;
- Figure 2: illustrates two miniaturized RFID tags;
- Figure 3: illustrates a configuration which is arranged for performing a method in which products include "coding beads".

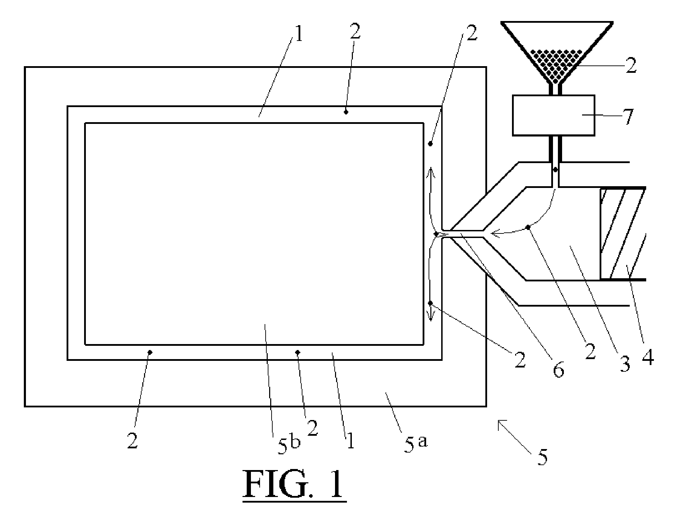

Figure 1 illustrates the manufacture of a product 1, e.g. a tray, including a number of ID members 2 by supplying a liquid synthetic mass 3 -via a well known feeding mechanism 4 into a mold 5 -comprising an outer mold 5a including a cavity, and a inner mold or kernel 5b within that cavity- via a mold entry 6. Under control of a controller 7 several identification members -"coding beads"- are supplied to the liquid mass 3 and fed into the mold via the mold entry 6, together with the liquid mass 3.

It is preferred that the identification members 2 are fed into the mold 5 at different mutual intervals, under control of the controller 7, preferably at randomly chosen intervals; to that end the controller 7 may be controlled by an internal of external random generator.

The identification members 2 comprise a metal body or a magnetic body. Alternatively the identification members may comprise or be constituted by a body made of a material which has reflective or absorbent properties for a specific wavelength area, e.g. for infrared or ultraviolet radiation, which are contrasting to the surrounding product material 1. The size of the members 2 must be well fit to pass the (small) passage of the mold entry.

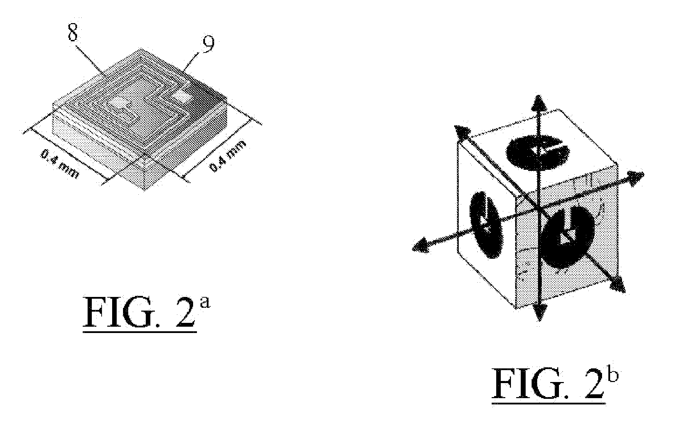

Instead of metal or magnetic coding beads 2, an identification member comprising an RFID tag may be inserted into the fluid stream (represented in figure 1 by some arrows), preferably a 3D-sensitive RFID tag. Nowadays RFID tags may have dimensions of around 0.5 x 0.5 mm, including an embedded RFID antenna 8 and an ultra-small RFID chip as illustrated in figure 2a, derived from www.smart-systems-integration.org/public/internet-of-things/presentations/EC-EPoSS%20Workshop%20_Vermesan_Sintef.pdf. Such(1D-)tags may form the basis of 3D-tags, as e.g. suggested in US2006/0273905, illustrated in figure 2b. When introduced into the product 1, such 3D-RFID tags -provided with any (unique) code-can be read out from the outside of the product. After production of the product 1 its RFID code(s) can be input into a database and linked to the relevant product. Further in the logistic process the product's RFID can be read (from any direction) and retrieved in the product database. As a result of the fact that the tag -due to the process described in the foregoing-the location of the RFID tag is hidden from the outside, the product code is less susceptible for fraud.

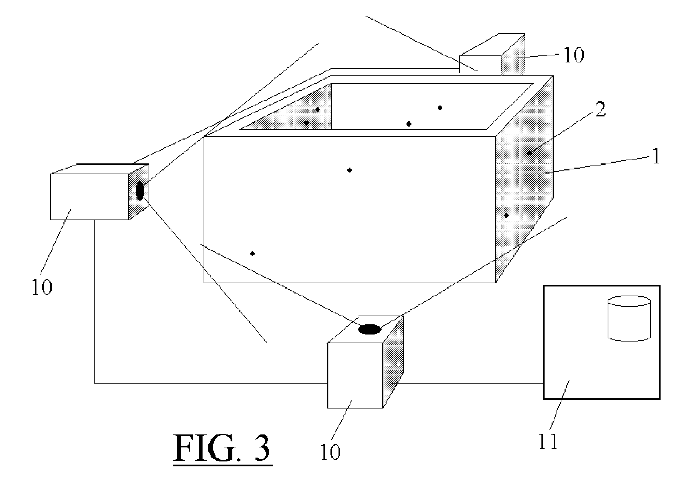

Figure 3 illustrates a configuration which is arranged for performing a method in which products which include "coding beads" as illustrated in figure 1.

In a first stage, e.g. as final step of the manufacture of the product, when the (solidified) product has been released from the mold 5 (figure 1), from outside the product, the location and/or the magnetic field strength respectively of said several identification members, residing inside the product, is determined by a 3D detector configuration 10 which is arranged to detect the coding beads 2 and their geometrical locations within the product 1 (note that, although the beads 2 are visibly shown in figure 3, in reality those beads will not be visible or optically detectable). Instead of a 3D detector 10 a moving 1D detector might be used. Next a code is assigned to the product and/or to the location and/or the magnetic field strength respectively of said several identification members, residing inside the product, which can be represented by <image parameters of the location/magnetic field of the ID member> <product code>, which link is input into a product registration database 11.

In a second stage, e.g. in any stage of the logistic process, the location and/or the magnetic field strength respectively of said several identification members residing inside the product is determined from outside the product by a similar configuration as shown in figure 3, after which the product code is retrieved in the product registration database 11 from the detected image of the ID beads 2. In this way product codes can be read from the product, viz. by retrieval of the linked <image parameter> <product code> pairs in de registration database, which product codes may be used for e.g. product tracing and/or security reasons.

## Claims

1. Method for manufacturing a solid synthetic product (1) comprising one or more solid identification members (2), comprising the following steps:
- supplying a liquid synthetic mass (3) into a mold (5) via a mold entry (6);
- supplying said one or more identification members to said liquid mass and feeding it/them into the mold via said mold entry, together with said liquid mass.

2. Method according to claim 1, wherein several of said identification members are fed into the mold at different mutual intervals.

3. Method according to claim 2, wherein several of said identification members are fed into the mold at randomly chosen intervals.

4. Method according to any of claims 1 - 3, wherein such an identification member comprises a metal body.

5. Method according to any of claims 1 - 3, wherein such an identification member comprises a magnetic body.

6. Method according to any of claims 1 - 3, wherein such an identification member comprises or is constituted by a body made of a material which has reflective or absorbent properties for a specific wavelength area, e.g. for infrared or ultraviolet radiation, which are contrasting to the surrounding product material (1).

7. Method according to any of claims 1 - 3, wherein such an identification member comprises an RFID tag.

8. Method according to claim 7, wherein said RFID tag is a 3D-sensitive RFID tag.

9. Product made by a method according to any of claims 1 - 8.

10. Method for using a product made by the method according to any of claims 2 - 6, comprising the following steps:
- in a first stage:
- determining, from outside the product, the location and/or the magnetic field strength respectively of said several identification members, residing inside the product;
- assigning a code to the product and/or to the location and/or the magnetic field strength respectively of said several identification members, residing inside the product;
- in a second stage:
- determining, from outside the product, the location and/or the magnetic field strength respectively of said several identification members, residing inside the product;
- assigning a code to the product based on the determined location and/or the magnetic field strength respectively of said several identification members, residing inside the product.
